# EUROPÄISCHE PATENTANMELDUNG

(11) **EP 1 640 063 A1**
(43) Veröffentlichungstag der Anmeldung: **29.03.2006**
(21) Anmeldenummer: 04022489.1
(22) Anmeldetag: 22.09.2004
(51) Int. Cl.: B01J 13/16

(54) **Polyamidmikrokapseln (VI)**

(71) Anmelder: Cognis IP Management GmbH, 40589 Düsseldorf (DE)
(72) Erfinder: CALDERO LINNHOFF, Gabriela, 08034 Barcelona (ES); VILADOT PETIT, Josep-Lluis, 08018 Barcelona (ES)

(57) **Zusammenfassung**

Vorgeschlagen werden neue Polyamidmikrokapseln mit einem mittleren Durchmesser im Bereich von 0,0001 bis 5 mm, die dadurch erhältlich sind, dass man
(a) eine wässrige Phase enthaltend (a1) Di- und/oder Triamine herstellt,
(b) eine Ölphase, enthaltend (b1) Ölkörper, (b2) Dicarbonsäurechloride und (b3) Tricarbonsäurechloride herstellt, und
(c) die beiden Phasen unter Ausbildung einer Emulsion in Kontakt bringt, so dass an den Grenzflächen eine Polykondensationsreaktion stattfindet.

## Beschreibung

### Gebiet der Erfindung

Die Erfindung befindet sich auf dem Gebiet der verkapselten Wirkstoffe und betrifft neue Mikrokapseln mit Polyamidhüllen, ein Verfahren zu deren Herstellung sowie deren Verwendung in einer Reihe von Einsatzgebieten.

### Stand der Technik

Unter dem Begriff "Mikrokapsel" werden vom Fachmann sphärische Aggregate mit einem Durchmesser im Bereich von etwa 0,0001 bis etwa 5 mm verstanden, die mindestens einen festen oder flüssigen Kern enthalten, der von mindestens einer kontinuierlichen Hülle umschlossen ist. Genauer gesagt handelt es sich um mit filmbildenden Polymeren umhüllte feindisperse flüssige oder feste Phasen, bei deren Herstellung sich die Polymere nach Emulgierung und Koazervation oder Grenzflächenpolymerisation auf dem einzuhüllenden Material niederschlagen. Nach einem anderen Verfahren werden geschmolzene Wachse in einer Matrix aufgenommen ("microsponge"), die als Mikropartikel zusätzlich mit filmbildenden Polymeren umhüllt sein können. Die mikroskopisch kleinen Kapseln, auch Nanokapseln genannt, lassen sich wie Pulver trocknen. Neben einkernigen Mikrokapseln sind auch mehrkernige Aggregate, auch Mikrosphären genannt, bekannt, die zwei oder mehr Kerne im kontinuierlichen Hüllmaterial verteilt enthalten. Ein- oder mehrkernige Mikrokapseln können zudem von einer zusätzlichen zweiten, dritten etc. Hülle umschlossen sein. Die Hülle kann aus natürlichen, halbsynthetischen oder synthetischen Materialien bestehen. Natürlich Hüllmaterialien sind beispielsweise Gummi Arabicum, Agar-Agar, Agarose, Maltodextrine, Alginsäure bzw. ihre Salze, z.B. Natrium- oder Calciumalginat, Fette und Fettsäuren, Cetylalkohol, Collagen, Chitosan, Lecithine, Gelatine, Albumin, Schellack, Polysaccharide, wie Stärke oder Dextran, Polypeptide, Proteinhydrolysate, Sucrose und Wachse. Halbsynthetische Hüllmaterialien sind unter anderem chemisch modifizierte Cellulosen, insbesondere Celluloseester und -ether, z.B. Celluloseacetat, Ethylcellulose, Hydroxypropylcellulose, Hydroxypropylmethylcellulose und Carboxymethylcellulose, sowie Stärkederivate, insbesondere Stärkeether und -ester. Synthetische Hüllmaterialien sind beispielsweise Polymere wie Polyacrylate, Polyamide, Polyvinylalkohol oder Polyvinylpyrrolidon.

Beispiele für Mikrokapseln des Stands der Technik sind folgende Handelsprodukte (in Klammern angegeben ist jeweils das Hüllmaterial) : *Hallcrest Microcapsules* (Gelatine, Gummi Arabicum), *Coletica Thalaspheres* (maritimes Collagen), *Lipotec Millicapseln* (Alginsäure, Agar-Agar), *Induchem Unispheres* (Lactose, mikrokristalline Cellulose, Hydroxypropylmethylcellulose); *Unicerin C30* (Lactose, mikrokristalline Cellulose, Hydroxypropylmethylcellulose), *Kobo Glycospheres* (modifizierte Stärke, Fettsäureester, Phospholipide), *Softspheres* (modifiziertes Agar-Agar) und *Kuhs Probiol Nanospheres* (Phospholipide) sowie *Primaspheres* und *Primasponges* (Chitosan, Alginate) und *Primasys* (Phospholipide).

Eine interessante Gruppe von Mikrokapseln auf Polyamidbasis ist aus den Druckschriften **EP 1398073 A1, EP 1398074 A1, EP 1398075 A1** und **EP 1398076 A1** (Cognis) bekannt, die durch Emulsionspolymerisation von Di- oder Triaminen mit Dicarbonsäurechloriden erhalten werden. Von Nachteil ist jedoch, dass die Polyamidmikrokapseln des Stands der Technik zwar gegenüber aggressiven Medien wie Hypochloritlösungen oder Wasserstoffperoxid eine hohe chemische Stabilität aufweisen, jedoch nur wenig temperaturbelastbar sind und insbesondere eine zu geringe Elastizität aufweisen. Eine Ausrüstung von Fasern und Textilien mit wirkstoffbeladenen Polyamidmikrokapseln beispielsweise durch Zwangsapplikation - was ja gerade die Anwendung von Druck und Temperatur erforderlich macht - ist daher nicht möglich.

Die Aufgabe der vorliegenden Erfindung hat folglich darin bestanden, neue Polyamidmikrokapseln mit mittleren Durchmessern im Bereich von 0,0001 bis 5 mm zur Verfügung zu stellen, die gegenüber den Produkten des Stands der Technik eine größere Elastizität sowie eine höhere Temperaturbelastbarkeit aufweisen.

### Beschreibung der Erfindung

Gegenstand der Erfindung sind neue Polyamidmikrokapseln mit einem mittleren Durchmesser im Bereich von 0,0001 bis 5 mm, die dadurch erhältlich sind, dass man
(a) eine wässrige Phase enthaltend (a1) Di- und/oder Triamine herstellt,
(b) eine Ölphase, enthaltend (b1) Ölkörper, (b2) Dicarbonsäurechloride und (b3) Tricarbonsäurechloride herstellt, und
(c) die beiden Phasen unter Ausbildung einer Emulsion in Kontakt bringt, so dass an den Grenzflächen eine Polykondensationsreaktion stattfindet.

Überraschenderweise wurde gefunden, dass die auf diesem Wege erhältlichen Polyamidmikrokapseln eine größere mechanische Elastizität und Stabilität aufweisen und sich auch bei höheren Temperaturen, etwa bei 40 bis 60 °C, weder aufbrechen noch schmelzen, so dass sie sich daher auch für die Textilausrüstung über den Weg der Zwangsapplikation eignen. Die verbesserten Eigenschaften sind im wesentlichen auf die Mitverwendung von Polycarbonsäuren bzw. deren Derivaten mit wenigstens drei Carboxylfunktionen zurückzuführen, die zu einer besonders starken Vernetzung in der Polyamidhülle führen. Die Verwendung von Polycarbonsäuren bzw. deren Derivaten mit wenigstens drei Carboxylfunktionen zur Herstellung von Polyamidkapseln stellt daher einen weiteren Gegenstand der vorliegenden Erfindung dar.

### Herstellverfahren

Ein weiterer Gegenstand der Erfindung betrifft ein erstes Verfahren zur Herstellung von Polyamidmikrokapseln mit einem mittleren Durchmesser im Bereich von 0,0001 bis 5 mm, bei dem man
(a) eine wässrige Phase enthaltend (a1) Di- und/oder Triamine herstellt,
(b) eine Ölphase, enthaltend (b1) Ölkörper, (b2) Dicarbonsäurechloride und (b3) Tricarbonsäurechloride herstellt, und
(c) die beiden Phasen unter Ausbildung einer Emulsion in Kontakt bringt, so dass an den Grenzflächen eine Polykondensationsreaktion stattfindet.

Ein weiterer Gegenstand betrifft ein zweites Verfahren zur Herstellung von Polyamidmikrokapseln mit einem mittleren Durchmesser im Bereich von 0,0001 bis 0,1 mm, bei dem man
(a) eine Ölphase, enthaltend (c1) Ölkörper sowie (c2) oberflächenaktive Mittel herstellt,
(b) eine wässrige Phase, enthaltend (a1) Di- und/oder Triamine sowie gegebenenfalls (c3) wasserlösliche Wirkstoffe herstellt,
(c) Ölphase und wässrige Phase unter Bildung einer W/O-Emulsion vermischt,
(d) und die W/O-Emulsion mit einer weiteren eine Ölphase, enthaltend (b1) Ölkörper, (b2) Dicarbonsäurechloride und (b3) Tricarbonsäurechloride in Kontakt bringt, so dass an den Grenzflächen eine Polykondensationsreaktion stattfindet.

Schließlich hat die Erfindung ein weiteres Verfahren zur Herstellung von Polyamidmikrokapseln mit einem mittleren Durchmesser im Bereich von 0,1 bis 5 mm zum Gegenstand, bei dem man
(a) eine Ölphase, enthaltend (c1) Ölkörper sowie gegebenenfalls (c4) öllösliche oder ölsuspendierbare Wirkstoffe herstellt,
(b) eine wässrige Phase, enthaltend (a1) Di- und/oder Triamine sowie gegebenenfalls (c3) wasserlösliche Wirkstoffe herstellt,
(c) Ölphase und wässrige Phase unter Bildung einer W/O-Emulsion vermischt,
(d) und die W/O-Emulsion mit einer weiteren eine Ölphase, enthaltend (b1) Ölkörper, (b2) Dicarbonsäurechloride und (b3) Tricarbonsäurechloride in Kontakt bringt, so dass an den Grenzflächen eine Polykondensationsreaktion stattfindet.

### Diamine und Triamine

In einem ersten Schritt des erfindungsgemäßen Verfahrens wird eine wässrige Zubereitung hergestellt, welche als Komponente (a1) das für die Polykondensation benötigte Di- und/oder Triamin enthält. Die Auswahl dieser Komponente ist wenig kritisch, demnach kommen grundsätzlich alle aliphatischen oder aromatischen Di- oder Triamine in Betracht, die über eine hinreichende Wasserlöslichkeit verfügen. Besonders bevorzugt sind indes das für Nylon-6,6 bekannte Hexamethylendiamin (auch als 1,6-Hexandiamin bezeichnet), 1,5-Diamino-2-methylpentan, 5-Amino-1,2,3-trimethylcyclohexamethylenamin (Isophorondiamin), Diethylendiamin (Piperazin) sowie Aminosäuren wie beispielsweise L-Lysin oder Arginen. Als Triamin eignet sich beispielsweise Bis(hexamethylen)triamin, bevorzugt ist indes Diethylentriamin. Der Einsatz von Triaminen bietet infolge der bei der Polykondensation stattfindenden Vernetzung den Vorteil, dass die Mikrokapseln stabiler werden. Besonders bevorzugt ist daher die Kombination aus Hexamethylendiamin und Diethylentriamin im Gewichtsverhältnis 20 : 80 bis 80 : 20 und insbesondere 60 : 40 bis 40 : 60. Die wässrige Phase enthält die Komponente (a1) üblicherweise in Mengen von 0,1 bis 5, vorzugsweise 0,5 bis 2 Gew.-%.

### Ölkörper

Ölkörper, die die Komponente (b1) bzw. (c1) darstellen, bilden die Basis der Ölphasen und dienen dazu, zum einen die Carbonsäuren bzw. deren Derivate und zum anderen bestimmte Wirkstoffe zu lösen. Als Ölkörper kommen beispielsweise Guerbetalkohole auf Basis von Fettalkoholen mit 6 bis 18, vorzugsweise 8 bis 10 Kohlenstoffatomen, Ester von linearen C₆-C₂₂₋Fettsäuren mit linearen oder verzweigten C₆-C₂₂-Fettalkoholen bzw. Ester von verzweigten C₆₋C₁₃-Carbonsäuren mit linearen oder verzweigten C₆-C₂₂-Fettalkoholen, wie z.B. Myristylmyristat, Myristylpalmitat, Myristylstearat, Myristylisostearat, Myristyloleat, Myristylbehenat, Myristylerucat, Cetylmyristat, Cetylpalmitat, Cetylstearat, Cetylisostearat, Cetyloleat, Cetylbehenat, Cetylerucat, Stearylmyristat, Stearylpalmitat, Stearylstearat, Stearylisostearat, Stearyloleat, Stearylbehenat, Stearylerucat, Isostearylmyristat, Isostearylpalmitat, Isostearylstearat, Isostearylisostearat, Isostearyloleat, Isostearylbehenat, Isostearyloleat, Oleylmyristat, Oleylpalmitat, Oleylstearat, Oleylisostearat, Oleyloleat, Oleylbehenat, Oleylerucat, Behenylmyristat, Behenylpalmitat, Behenylstearat, Behenylisostearat, Behenyloleat, Behenylbehenat, Behenylerucat, Erucylmyristat, Erucylpalmitat, Erucylstearat, Erucylisostearat, Erucyloleat, Erucylbehenat und Erucylerucat. Daneben eignen sich Ester von linearen C₆-C₂₂-Fettsäuren mit verzweigten Alkoholen, insbesondere 2-Ethylhexanol, Ester von C₁₈-C₃₈-Alkylhydroxycarbonsäuren mit linearen oder verzweigten C₆-C₂₂-Fettalkoholen, insbesondere Dioctyl Malate, Ester von linearen und/oder verzweigten Fettsäuren mit mehrwertigen Alkoholen (wie z.B. Propylenglycol, Dimerdiol oder Trimertriol) und/oder Guerbetalkoholen, Triglyceride auf Basis C₆-C₁₀-Fettsäuren, flüssige Mono-/Di-/Triglyceridmischungen auf Basis von C₆-C₁₈₋Fettsäuren, Ester von C₆-C₂₂-Fettalkoholen und/oder Guerbetalkoholen mit aromatischen Carbonsäuren, insbesondere Benzoesäure, Ester von C₂-C₁₂-Dicarbonsäuren mit linearen oder verzweigten Alkoholen mit 1 bis 22 Kohlenstoffatomen oder Polyolen mit 2 bis 10 Kohlenstoffatomen und 2 bis 6 Hydroxylgruppen, pflanzliche Öle, verzweigte primäre Alkohole, substituierte Cyclohexane, lineare und verzweigte C₆-C₂₂-Fettalkoholcarbonate, wie z.B. Dicaprylyl Carbonate (Cetiol® CC), Guerbetcarbonate auf Basis von Fettalkoholen mit 6 bis 18, vorzugsweise 8 bis 10 C Atomen, Ester der Benzoesäure mit linearen und/oder verzweigten C₆₋C₂₂-Alkoholen (z.B. Finsolv® TN), lineare oder verzweigte, symmetrische oder unsymmetrische Dialkylether mit 6 bis 22 Kohlenstoffatomen pro Alkylgruppe, wie z.B. Dicaprylyl Ether (Cetiol® OE), Ringöffnungsprodukte von epoxidierten Fettsäureestern mit Polyolen, Siliconöle (Cyclomethicone, Siliciummethicontypen u.a.) und/oder aliphatische bzw. naphthenische Kohlenwasserstoffe, wie z.B. wie Dekan, Dodecan, Tetradecan, Squalan, Squalen oder Dialkylcyclohexane in Betracht. Besonders bevorzugt sind neben Mineralölen, langkettige Fettsäureester, wie beispielsweise 2-Ethylhexylstearat, Dialkylcyclohexane, wie beispielsweise Di-2-ethylhexylcyclohexan, Dialkylether und Dialkylcarbonate.

### Dicarbonsäurechloride

Die Auswahl der Dicarbonsäuren (Komponente b2) richtet sich im wesentlichen nach deren technischen Verfügbarkeit. Im Hinblick auf die Herstellung von Nylon-6,6-Kapseln empfiehlt sich natürlich wieder Sebacinsäurechlorid. Alternativ können aber auch die Chloride der Adipinsäure, Malonsäure, Diethylmalonsäure, Fumarsäure, Azelainsäure Phthalsäure oder Terephthalsäure sowie längerkettige Dicarbonsäuren, wie die bei der Fermentation von entsprechenden Paraffinen anfallende 1,18-Hexadecandicarbonsäure bzw. eingesetzt werden. Die Ölphase enthält die Komponente (b2) üblicherweise in Mengen von 0,1 bis 5 und vorzugsweise 2 bis 3 Gew.-%.

### Tricarbonsäurechloride

Die Auswahl der Dicarbonsäuren (Komponente b2) richtet sich ebenfalls im wesentlichen nach deren technischen Verfügbarkeit. Bevorzugt ist der Einsatz von Trimesinsäuresäurechlorid (1,3,5-Benzoltricarbonsäurechlorid) Die Ölphase enthält die Komponente (b3) üblicherweise ebenfalls in Mengen von 0,1 bis 5 und vorzugsweise 2 bis 3 Gew.-%, wobei ein Gewichtsverhältnis zwischen Di- und Tricarbonsäurechloriden von 50 : 50 bis 80 : 20 bevorzugt ist.

### Oberflächenaktive Mittel

Die oberflächenaktiven Mittel (Komponente c2) werden der Ölphase zur Herstellung von besonders feinteiligen Mikrokapseln mit mittleren Durchmessern im Bereich von 0,0001 bis 0,1, vorzugsweise 0,001 bis 0,01 mm zugesetzt. Für diesen Zweck kommen sowohl anionische als auch kationische, amphotere oder zwitterionische oberflächenaktive, zur - O/W - Emulsionsbildung befähigte Verbindungen in Betracht. Vorzugsweise werden jedoch nichtionische Tenside eingesetzt. Typische Beispiele für nichtionische Tenside bzw. Emulgatoren (Komponente a2) sind
- Anlagerungsprodukte von 2 bis 30 Mol Ethylenoxid und/ oder 0 bis 5 Mol Propylenoxid an lineare Fettalkohole mit 8 bis 22 C-Atomen, an Fettsäuren mit 12 bis 22 C-Atomen, an Alkylphenole mit 8 bis 15 C-Atomen in der Alkylgruppe sowie Alkylamine mit 8 bis 22 Kohlenstoffatomen im Alkylrest;
- Alkyl- und/oder Alkenyloligoglykoside mit 8 bis 22 Kohlenstoffatomen im Alk(en)ylrest und deren ethoxylierte Analoga;
- Anlagerungsprodukte von 1 bis 15 Mol Ethylenoxid an Ricinusöl und/oder gehärtetes Ricinusöl;
- Anlagerungsprodukte von 15 bis 60 Mol Ethylenoxid an Ricinusöl und/oder gehärtetes Ricinusöl;
- Partialester von Glycerin und/oder Sorbitan mit ungesättigten, linearen oder gesättigten, verzweigten Fettsäuren mit 12 bis 22 Kohlenstoffatomen und/oder Hydroxycarbonsäuren mit 3 bis 18 Kohlenstoffatomen sowie deren Addukte mit 1 bis 30 Mol Ethylenoxid;
- Partialester von Polyglycerin (durchschnittlicher Eigenkondensationsgrad 2 bis 8), Polyethylenglycol (Molekulargewicht 400 bis 5000), Trimethylolpropan, Pentaerythrit, Zuckeralkoholen (z.B. Sorbit), Alkylglucosiden (z.B. Methylglucosid, Butylglucosid, Laurylglucosid) sowie Polyglucosiden (z.B. Cellulose) mit gesättigten und/oder ungesättigten, linearen oder verzweigten Fettsäuren mit 12 bis 22 Kohlenstoffatomen und/oder Hydroxycarbonsäuren mit 3 bis 18 Kohlenstoffatomen sowie deren Addukte mit 1 bis 30 Mol Ethylenoxid;
- Mischester aus Pentaerythrit, Fettsäuren, Citronensäure und Fettalkohol und/oder Mischester von Fettsäuren mit 6 bis 22 Kohlenstoffatomen, Methylglucose und Polyolen, vorzugsweise Glycerin oder Polyglycerin.
- Mono-, Di- und Trialkylphosphate sowie Mono-, Di- und/oder Tri-PEGalkylphosphate und deren Salze;
- Wollwachsalkohole;
- Polysiloxan-Polyalkyl-Polyether-Copolymere bzw. entsprechende Derivate;
- Block-Copolymere z.B. Polyethylenglycol-30 Dipolyhydroxystearate;
- Polymeremulgatoren, z.B. Pemulen-Typen (TR-1,TR-2) von Goodrich;
- Polyalkylenglycole sowie
- Glycerincarbonat.

### • Ethylenoxidanlagerungsprodukte

Die Anlagerungsprodukte von Ethylenoxid und/oder von Propylenoxid an Fettalkohole, Fettsäuren, Alkylphenole oder an Ricinusöl stellen bekannte, im Handel erhältliche Produkte dar. Es handelt sich dabei um Homologengemische, deren mittlerer Alkoxylierungsgrad dem Verhältnis der Stoffmengen von Ethylenoxid und/ oder Propylenoxid und Substrat, mit denen die Anlagerungsreaktion durchgeführt wird, entspricht. C_{12/18-}Fettsäuremono- und -diester von Anlagerungsprodukten von Ethylenoxid an Glycerin sind als Rückfettungsmittel für kosmetische Zubereitungen bekannt.

### • Alkyl- und/oder Alkenyloligoglykoside

Alkyl- und/oder Alkenyloligoglycoside, ihre Herstellung und ihre Verwendung sind aus dem Stand der Technik bekannt. Ihre Herstellung erfolgt insbesondere durch Umsetzung von Glucose oder Oligosacchariden mit primären Alkoholen mit 8 bis 18 Kohlenstoffatomen. Bezüglich des Glycosidrestes gilt, daß sowohl Monoglycoside, bei denen ein cyclischer Zuckerrest glycosidisch an den Fettalkohol gebunden ist, als auch oligomere Glycoside mit einem Oligomerisationsgrad bis vorzugsweise etwa 8 geeignet sind. Der Oligomerisierungsgrad ist dabei ein statistischer Mittelwert, dem eine für solche technischen Produkte übliche Homologenverteilung zugrunde liegt.

### • Partialglyceride

Typische Beispiele für geeignete Partialglyceride sind Hydroxystearinsäuremonoglycerid, Hydroxystearinsäurediglycerid, Isostearinsäuremonoglycerid, Isostearinsäurediglycerid, Ölsäuremonoglycerid, Ölsäurediglycerid, Ricinolsäuremoglycerid, Ricinolsäurediglycerid, Linolsäuremonoglycerid, Linolsäurediglycerid, Linolensäuremonoglycerid, Linolensäurediglycerid, Erucasäuremonoglycerid, Erucasäurediglycerid, Weinsäuremonoglycerid, Weinsäurediglycerid, Citronensäuremonoglycerid, Citronendiglycerid, Äpfelsäuremonoglycerid, Äpfelsäurediglycerid sowie deren technische Gemische, die untergeordnet aus dem Herstellungsprozeß noch geringe Mengen an Triglycerid enthalten können. Ebenfalls geeignet sind Anlagerungsprodukte von 1 bis 30, vorzugsweise 5 bis 10 Mol Ethylenoxid an die genannten Partialglyceride.

### • Sorbitanester

Als Sorbitanester kommen Sorbitanmonoisostearat, Sorbitansesquiisostearat, Sorbitandiisostearat, Sorbitantriisostearat, Sorbitanmonooleat, Sorbitansesquioleat, Sorbitandioleat, Sorbitantrioleat, Sorbitanmonoerucat, Sorbitansesquierucat, Sorbitandierucat, Sorbitantrierucat, Sorbitanmonoricinoleat, Sorbitansesquiricinoleat, Sorbitandiricinoleat, Sorbitantriricinoleat, Sorbitanmonohydroxystearat, Sorbitansesquihydroxystearat, Sorbitandihydroxystearat, Sorbitantrihydroxystearat, Sorbitanmonotartrat, Sorbitansesquitartrat, Sorbitanditartrat, Sorbitantritartrat, Sorbitanmonocitrat, Sorbitansesquicitrat, Sorbitandicitrat, Sorbitantricitrat, Sorbitanmonomaleat, Sorbitansesquimaleat, Sorbitandimaleat, Sorbitantrimaleat sowie deren technische Gemische. Ebenfalls geeignet sind Anlagerungsprodukte von 1 bis 30, vorzugsweise 5 bis 10 Mol Ethylenoxid an die genannten Sorbitanester.

### • Polyglycerinester

Typische Beispiele für geeignete Polyglycerinester sind Polyglyceryl-2 Dipolyhydroxystearate (Dehymuls® PGPH), Polyglycerin-3-Diisostearate (Lameform® TGI), Polyglyceryl-4 Isostearate (Isolan® GI 34), Polyglyceryl-3 Oleate, Diisostearoyl Polyglyceryl-3 Diisostearate (Isolan® PDI), Polyglyceryl-3 Methylglucose Distearate (Tego Care® 450), Polyglyceryl-3 Beeswax (Cera Bellina®), Polyglyceryl-4 Caprate (Polyglycerol Caprate T2010/90), Polyglyceryl-3 Cetyl Ether (Chimexane® NL), Polyglyceryl-3 Distearate (Cremophor® GS 32) und Polyglyceryl Polyricinoleate (Admul® WOL 1403) Polyglyceryl Dimerate Isostearate sowie deren Gemische. Beispiele für weitere geeignete Polyolester sind die gegebenenfalls mit 1 bis 30 Mol Ethylenoxid umgesetzten Mono-, Di- und Triester von Trimethylolpropan oder Pentaerythrit mit Laurinsäure, Kokosfettsäure, Talgfettsäure, Palmitinsäure, Stearinsäure, Ölsäure, Behensäure und dergleichen.

Die Ölphase enthält die oberflächenaktiven Verbindungen üblicherweise in Mengen von 0,1 bis 5, vorzugsweise 0,5 bis 2 Gew.-%.

### Wirkstoffe

In einer bevorzugten Ausführungsform der vorliegenden Erfindung enthalten die Mikrokapseln in ihrer inneren Phase entweder wasserlösliche oder öllösliche bzw. öldispergierbare Wirkstoffe (Komponente c3 bzw. c4), deren Auswahl weitgehend unkritisch ist und sich ausschließlich nach der Aufgabenstellung richtet. Typische Beispiele sind Enzyme, biogene Wirkstoffe, Antioxidantien, UV-Filter, Parfümöle und Aromen, Farbstoffe bzw. Farbpigmente sowie vollständige kosmetische oder pharmazeutische Emulsionen. Im Hinblick auf Verwendungen Bereich der Haushaltsdetergentien bzw. der Textiltechnik ist der Einsatz von Enzymen, Farb- und Duftstoffen bevorzugt, die ansonsten in dieser Umgebung chemisch instabil wären. Nichtsdestotrotz können die Kapseln natürlich auch in jeder anderen wässrigen oder ölhaltigen Umgebung, also beispielsweise in der Kosmetik oder zur Beschichtung von Gebrauchs- und Hygienepapieren eingesetzt werden. Die wässrige bzw. ölhaltige Phase enthält die Komponenten (c3) bzw. (c4) üblicherweise in Mengen von 0,1 bis 25 und vorzugsweise 2 bis 3 Gew.-%.

### • Enzyme

Als Enzyme kommen insbesondere solche aus der Klasse der Hydrolasen, wie der Proteasen, Esterasen, Lipasen bzw. lipolytisch wirkenden Enzyme, Amylasen, Cellulasen bzw. andere Glykosylhydrolasen und Gemische der genannten Enzyme in Frage. Alle diese Hydrolasen tragen in der Wäsche zur Entfernung von Verfleckungen, wie protein-, fett- oder stärkehaltigen Verfleckungen, und Vergrauungen bei. Cellulasen und andere Glykosylhydrolasen können durch das Entfernen von Pilling und Mikrofibrillen zur Farberhaltung und zur Erhöhung der Weichheit des Textils beitragen. Zur Bleiche bzw. zur Hemmung der Farbübertragung können auch Oxidoreduktasen eingesetzt werden. Besonders gut geeignet sind aus Bakterienstämmen oder Pilzen, wie Bacillus subtilis, Bacillus licheniformis, Streptomyces griseus und Humicola insolens gewonnene enzymatische Wirkstoffe. Vorzugsweise werden Proteasen vom Subtilisin-Typ und insbesondere Proteasen, die aus Bacillus lentus gewonnen werden, eingesetzt. Dabei sind Enzymmischungen, beispielsweise aus Protease und Amylase oder Protease und Lipase bzw. lipolytisch wirkenden Enzymen oder Protease und Cellulase oder aus Cellulase und Lipase bzw. lipolytisch wirkenden Enzymen oder aus Protease, Amylase und Lipase bzw. lipolytisch wirkenden Enzymen oder Protease, Lipase bzw. lipolytisch wirkenden Enzymen und Cellulase, insbesondere jedoch Protease- und/oder Lipase-haltige Mischungen bzw. Mischungen mit lipolytisch wirkenden Enzymen von besonderem Interesse. Beispiele für derartige lipolytisch wirkende Enzyme sind die bekannten Cutinasen. Auch Peroxidasen oder Oxidasen haben sich in einigen Fällen als geeignet erwiesen. Zu den geeigneten Amylasen zählen insbesondere α-Amylasen, Iso-Amylasen, Pullulanasen und Pektinasen. Als Cellulasen werden vorzugsweise Cellobiohydrolasen, Endoglucanasen und β-Glucosidasen, die auch Cellobiasen genannt werden, bzw. Mischungen aus diesen eingesetzt. Da sich die verschiedenen Cellulase-Typen durch ihre CMCase- und Avicelase-Aktivitäten unterscheiden, können durch gezielte Mischungen der Cellulasen die gewünschten Aktivitäten eingestellt werden.

### • Biogene Wirkstoffe

Unter biogenen Wirkstoffen sind beispielsweise Tocopherol, Tocopherolacetat, Tocopherolpalmitat, Ascorbinsäure, (Desoxy)Ribonucleinsäure und deren Fragmentierungsprodukte, β-Glucane, Retinol, Bisabolol, Allantoin, Phytantriol, Panthenol, AHA-Säuren, Dihydroxyaceton, Arbutin, Ferulasäure, Kojisäure, Cumarinsäure und Ascorbinsäure (Vitamin C), Aminosäuren, Ceramide, Pseudoceramide, essentielle Öle, Pflanzenextrakte, wie z.B. Prunusextrakt, Bambaranussextrakt und Vitaminkomplexe zu verstehen.

### • Antioxidantien

Antioxidantien unterbrechen die photochemische Reaktionskette, welche ausgelöst wird, wenn UV-Strahlung in die Haut eindringt. Typische Beispiele hierfür sind Aminosäuren (z.B. Glycin, Histidin, Tyrosin, Tryptophan) und deren Derivate, Imidazole (z.B. Urocaninsäure) und deren Derivate, Peptide wie D,L-Carnosin, D-Carnosin, L-Carnosin und deren Derivate (z.B. Anserin), Carotinoide, Carotine (z.B. α-Carotin, β-Carotin, Lycopin) und deren Derivate, Chlorogensäure und deren Derivate, Liponsäure und deren Derivate (z.B. Dihydroliponsäure), Aurothioglucose, Propylthiouracil und andere Thiole (z.B. Thioredoxin, Glutathion, Cystein, Cystin, Cystamin und deren Glycosyl-, N-Acetyl-, Methyl-, Ethyl-, Propyl-, Amyl-, Butyl- und Lauryl-, Palmitoyl-, Oleyl-, γ-Linoleyl-, Cholesteryl- und Glycerylester) sowie deren Salze, Dilaurylthiodipropionat, Distearylthiodipropionat, Thiodipropionsäure und deren Derivate (Ester, Ether, Peptide, Lipide, Nukleotide, Nukleoside und Salze) sowie Sulfoximinverbindungen (z.B. Buthioninsulfoximine, Homocysteinsulfoximin, Butioninsulfone, Penta-, Hexa-, Heptathioninsulfoximin) in sehr geringen verträglichen Dosierungen (z.B. pmol bis µmol/kg), ferner (Metall)-Chelatoren (z.B. α-Hydroxyfettsäuren, Palmitinsäure, Phytinsäure, Lactoferrin), α-Hydroxysäuren (z.B. Citronensäure, Milchsäure, Äpfelsäure), Huminsäure, Gallensäure, Gallenextrakte, Bilirubin, Biliverdin, EDTA, EGTA und deren Derivate, ungesättigte Fettsäuren und deren Derivate (z.B. γ-Linolensäure, Linolsäure, Ölsäure), Folsäure und deren Derivate, Ubichinon und Ubichinol und deren Derivate, Vitamin C und Derivate (z.B. Ascorbylpalmitat, Mg-Ascorbylphosphat, Ascorbylacetat), Tocopherole und Derivate (z.B. Vitamin-E-acetat), Vitamin A und Derivate (Vitamin-A-palmitat) sowie Koniferylbenzoat des Benzoeharzes, Rutinsäure und deren Derivate, α-Glycosylrutin, Ferulasäure, Furfurylidenglucitol, Carnosin, Butylhydroxytoluol, Butylhydroxyanisol, Nordihydroguajakharzsäure, Nordihydroguajaretsäure, Trihydroxybutyrophenon, Harnsäure und deren Derivate, Mannose und deren Derivate, Superoxid-Dismutase, Zink und dessen Derivate (z.B. ZnO, ZnSO₄) Selen und dessen Derivate (z.B. Selen-Methionin), Stilbene und deren Derivate (z.B. Stilbenoxid, trans-Stilbenoxid) und die erfindungsgemäß geeigneten Derivate (Salze, Ester, Ether, Zucker, Nukleotide, Nukleoside, Peptide und Lipide) dieser genannten Wirkstoffe.

### • UV-Lichtschutzfilter

Unter UV-Lichtschutzfaktoren sind beispielsweise bei Raumtemperatur flüssig oder kristallin vorliegende organische Substanzen (Lichtschutzfilter) zu verstehen, die in der Lage sind, ultraviolette Strahlen zu absorbieren und die aufgenommene Energie in Form längerwelliger Strahlung, z.B. Wärme wieder abzugeben. UVB-Filter können öllöslich oder wasserlöslich sein. Als öllösliche Substanzen sind z.B. zu nennen:
- 3-Benzylidencampher bzw. 3-Benzylidennorcampher und dessen Derivate, z.B. 3-(4-Methylbenzyliden)campher beschrieben;
- 4-Aminobenzoesäurederivate, vorzugsweise 4-(Dimethylamino)benzoesäure-2-ethylhexylester, 4-(Dimethylamino)benzoesäure-2-octylester und 4-(Dimethylamino)-benzoesäureamylester;
- Ester der Zimtsäure, vorzugsweise 4-Methoxyzimtsäure-2-ethylhexylester, 4-Methoxyzimtsäurepropylester, 4-Methoxyzimtsäureisoamylester 2-Cyano-3,3-phenylzimtsäure-2-ethylhexylester (Octocrylene);
- Ester der Salicylsäure, vorzugsweise Salicylsäure-2-ethylhexylester, Salicylsäure-4-isopropylbenzylester, Salicylsäurehomomenthylester;
- Derivate des Benzophenons, vorzugsweise 2-Hydroxy-4-methoxybenzophenon, 2-Hydroxy-4-methoxy-4-methylbenzophenon, 2,2`-Dihydroxy-4-methoxybenzophenon;
- Ester der Benzalmalonsäure, vorzugsweise 4-Methoxybenzmalonsäuredi-2-ethylhexylester;
- Triazinderivate, wie z.B. 2,4,6-Trianilino-(p-carbo-2`-ethyl-1`-hexyloxy)-1,3,5-triazin und Octyl Triazon oder Dioctyl Butamido Triazone (Uvasorb® HEB);
- Propan-1,3-dione, wie z.B. 1-(4-tert.Butylphenyl)-3-(4'methoxyphenyl)propan-1,3-dion;
- Ketotricyclo(5.2.1.0)decan-Derivate.

Als wasserlösliche Substanzen kommen in Frage:
- 2-Phenylbenzimidazol-5-sulfonsäure und deren Alkali-, Erdalkali-, Ammonium-, Alkylammonium-, Alkanolammonium- und Glucammoniumsalze;
- Sulfonsäurederivate von Benzophenonen, vorzugsweise 2-Hydroxy-4-methoxybenzophenon-5-sulfonsäure und ihre Salze;
- Sulfonsäurederivate des 3-Benzylidencamphers, wie z.B. 4-(2-Oxo-3-bornylidenmethyl)benzolsulfonsäure und 2-Methyl-5-(2-oxo-3-bornyliden)sulfonsäure und deren Salze.

Als typische UV-A-Filter kommen insbesondere Derivate des Benzoylmethans in Frage, wie beispielsweise 1-(4'-tert.Butylphenyl)-3-(4'-methoxyphenyl)propan-1,3-dion, 4-tert.-Butyl-4'-methoxydibenzoylmethan (Parsol® 1789), 1-Phenyl-3-(4'-isopropylphenyl)-propan-1,3-dion sowie Enaminverbindungen. Die UV-A und UV-B-Filter können selbstverständlich auch in Mischungen eingesetzt werden. Besonders günstige Kombinationen bestehen aus den Derivate des Benzoylmethans" z.B. 4-tert.-Butyl-4'-methoxydibenzoylmethan (Parsol® 1789) und 2-Cyano-3,3-phenylzimtsäure-2-ethyl-hexylester (Octocrylene) in Kombination mit Ester der Zimtsäure, vorzugsweise 4-Methoxyzimtsäure-2-ethylhexylester und/oder 4-Methoxyzimtsäurepropylester und/oder 4-Methoxyzimtsäureisoamylester. Vorteilhaft werden derartige Kombinationen mit wasserlöslichen Filtern wie z.B. 2-Phenylbenzimidazol-5-sulfonsäure und deren Alkali-, Erdalkali-, Ammonium-, Alkylammonium-, Alkanolammonium- und Glucammoniumsalze kombiniert.

Neben den genannten löslichen Stoffen kommen für diesen Zweck auch unlösliche Lichtschutzpigmente, nämlich feindisperse Metalloxide bzw. Salze in Frage. Beispiele für geeignete Metalloxide sind insbesondere Zinkoxid und Titandioxid und daneben Oxide des Eisens, Zirkoniums, Siliciums, Mangans, Aluminiums und Cers sowie deren Gemische. Als Salze können Silicate (Talk), Bariumsulfat oder Zinkstearat eingesetzt werden. Die Oxide und Salze werden in Form der Pigmente für hautpflegende und hautschützende Emulsionen und dekorative Kosmetik verwendet. Die Partikel sollten dabei einen mittleren Durchmesser von weniger als 100 nm, vorzugsweise zwischen 5 und 50 nm und insbesondere zwischen 15 und 30 nm aufweisen. Sie können eine sphärische Form aufweisen, es können jedoch auch solche Partikel zum Einsatz kommen, die eine ellipsoide oder in sonstiger Weise von der sphärischen Gestalt abweichende Form besitzen. Die Pigmente können auch oberflächenbehandelt, d.h. hydrophilisiert oder hydrophobiert vorliegen. Typische Beispiele sind gecoatete Titandioxide, wie z.B. Titandioxid T 805 (Degussa) oder Eusolex® T2000 (Merck). Als hydrophobe Coatingmittel kommen dabei vor allem Silicone und dabei speziell Trialkoxyoctylsilane oder Simethicone in Frage. In Sonnenschutzmitteln werden bevorzugt sogenannte Mikro- oder Nanopigmente eingesetzt. Vorzugsweise wird mikronisiertes Zinkoxid verwendet.

### • Antischuppenwirkstoffe

Typische Beispiele für Antischuppenwirkstoffe sind Pirocton, Olamin (1-Hydroxy-4-methyl-6-(2,4,4-trimythylpentyl)-2-(1H)-pyridinonmonoethanolaminsalz), Baypival® (Climbazole), Ketoconazol®, (4-Acetyl-1-{-4-[2-(2.4-dichlorphenyl)r-2-(1H-imidazol-1-ylmethyl)-1,3-dioxylan-c-4-ylmethoxyphenyl}piperazin, Ketoconazol, Elubiol, Selendisulfid, Schwefel kolloidal, Schwefelpolyehtylenglykolsorbitanmonooleat, Schwefelrizinolpolyehtoxylat, Schwfelteer Destillate, Salicylsäure (bzw. in Kombination mit Hexachlorophen), Undexylensäure Monoethanolamid Sulfosuccinat Na-Salz, Lamepon® UD (Protein-Undecylensäurekondensat), Zinkpyrithion, Aluminiumpyrithion und Magnesiumpyrithion / Dipyrithion-Magnesiumsulfat.

### • Parfümöle und Aromen

Als Parfümöle seien genannt Gemische aus natürlichen und synthetischen Riechstoffen. Natürliche Riechstoffe sind Extrakte von Blüten (Lilie, Lavendel, Rosen, Jasmin, Neroli, Ylang-Ylang), Stengeln und Blättern (Geranium, Patchouli, Petitgrain), Früchten (Anis, Koriander, Kümmel, Wacholder), Fruchtschalen (Bergamotte, Zitrone, Orangen), Wurzeln (Macis, Angelica, Sellerie, Kardamon, Costus, Iris, Calmus), Hölzern (Pinien-, Sandel-, Guajak-, Zedern-, Rosenholz), Kräutern und Gräsern (Estragon, Lemongras, Salbei, Thymian), Nadeln und Zweigen (Fichte, Tanne, Kiefer, Latschen), Harzen und Balsamen (Galbanum, Elemi, Benzoe, Myrrhe, Olibanum, Opoponax). Weiterhin kommen tierische Rohstoffe in Frage, wie beispielsweise Zibet und Castoreum. Typische synthetische Riechstoffverbindungen sind Produkte vom Typ der Ester, Ether, Aldehyde, Ketone, Alkohole und Kohlenwasserstoffe. Riechstoffverbindungen vom Typ der Ester sind z.B. Benzylacetat, Phenoxyethylisobutyrat, p-tert.-Butylcyclohexylacetat, Linalylacetat, Dimethylbenzylcarbinylacetat, Phenylethylacetat, Linalylbenzoat, Benzylformiat, Ethylmethylphenylglycinat, Allylcyclohexylpropionat, Styrallylpropionat und Benzylsalicylat. Zu den Ethern zählen beispielsweise Benzylethylether, zu den Aldehyden z.B. die linearen Alkanale mit 8 bis 18 Kohlenstoffatomen, Citral, Citronellal, Citronellyloxyacetaldehyd, Cyclamenaldehyd, Hydroxycitronellal, Lilial und Bourgeonal, zu den Ketonen z.B. die Jonone, α-Isomethylionon und Methylcedrylketon, zu den Alkoholen Anethol, Citronellol, Eugenol, Isoeugenol, Geraniol, Linalool, Phenylethylalkohol und Terpineol, zu den Kohlenwasserstoffen gehören hauptsächlich die Terpene und Balsame. Bevorzugt werden jedoch Mischungen verschiedener Riechstoffe verwendet, die gemeinsam eine ansprechende Duftnote erzeugen. Auch ätherische Öle geringerer Flüchtigkeit, die meist als Aromakomponenten verwendet werden, eignen sich als Parfümöle, z.B. Salbeiöl, Kamillenöl, Nelkenöl, Melissenöl, Minzenöl, Zimtblätteröl, Lindenblütenöl, Wacholderbeerenöl, Vetiveröl, Olibanöl, Galbanumöl, Labolanumöl und Lavandinöl. Vorzugsweise werden Bergamotteöl, Dihydromyrcenol, Lilial, Lyral, Citronellol, Phenylethylalkohol, α-Hexylzimtaldehyd, Geraniol, Benzylaceton, Cyclamenaldehyd, Linalool, Boisambrene Forte, Ambroxan, Indol, Hedione, Sandelice, Citronenöl, Mandarinenöl, Orangenöl, Allylamylglycolat, Cyclovertal, Lavandinöl, Muskateller Salbeiöl, β-Damascone, Geraniumöl Bourbon, Cyclohexylsalicylat, Vertofix Coeur, Iso-E-Super, Fixolide NP, Evernyl, Iraldein gamma, Phenylessigsäure, Geranylacetat, Benzylacetat, Rosenoxid, Romilllat, Irotyl und Floramat allein oder in Mischungen, eingesetzt. Als Aromen kommen beispielsweise Pfefferminzöl, Krauseminzöl, Anisöl, Sternanisöl, Kümmelöl, Eukalyptusöl, Fenchelöl, Citronenöl, Wintergrünöl, Nelkenöl, Menthol und dergleichen in Frage.

### • Farbstoffe und Farbpigmente

Als Farbstoffe können die für kosmetische Zwecke geeigneten und zugelassenen Substanzen verwendet werden, wie sie beispielsweise in der Publikation **"Kosmetische Färbemittel" der Farbstoflkommission der Deutschen Forschungsgemeinschaft, Verlag Chemie, Weinheim, 1984, S.81-106** zusammengestellt sind. Beispiele sind Kochenillerot A (C.1. 16255), Patentblau V (C.1.42051), Indigotin (C.I.73015), Chlorophyllin (C.I.75810), Chinolingelb (C.I.47005), Titandioxid (C.I.77891), Indanthrenblau RS (C.I. 69800) und Krapplack (C.I.58000). Als Lumineszenzfarbstoff kann auch Luminol enthalten sein.

### Emulsionsbildung, Polykondensation, Härtung und Aufarbeitung

Der erste Schritt in der Herstellung der Mikrokapseln besteht in der Bildung einer Emulsion, bei der es sich in der Regel um eine W/O-Emulsion handelt. Zu diesem Zweck werden zunächst jeweils getrennt eine Ölphase sowie eine wässrige Phase hergestellt. Das allgemeine Verfahrensprinzip besteht dann darin, die in der wässrigen Phase enthaltende Aminkomponente mit der Ölphase zu vermischen und die resultierende Emulsion dann in eine weitere Ölphase einzubringen, in welcher sich die Carboxylkomponente befindet, so dass es dann zur Grenzflächenpolymerisation gegebenenfalls unter Einschluss der gewünschten Wirkstoffe kommt.

In der Praxis unterscheidet man zwei Modifikationen dieses allgemeinen Herstellungsweges, in Abhängigkeit davon, ob man Mikrokapseln erhalten will, die mit bloßem Auge kaum noch erkennbar sind (Durchmesser 0,0001 bis 0,1 mm) oder echte Kapseln, sogenannte "visible beads", mit Durchmessern im Bereich von 0,1 bis 5mm.

Im ersten Fall (Alternative I) hat es sich als vorteilhaft erwiesen, der Ölphase oberflächenaktive Mittel zuzusetzen, die als Emulgatoren dienen und die Bildung sehr kleiner Partikel in der Polymerisation unterstützen. Die Ölphase wird anschließend unter starker Scherung mit einer wässrigen, vorzugsweise alkalisch eingestellten Phase (pH = 9 bis 11) vermischt, welche die Aminkomponente sowie gegebenenfalls Polyole (z.B. Glycerin), Konsistenzfaktoren (z.B. Alginate, Agar-Agar etc.) sowie wasserlösliche Wirkstoffe enthält. Die dabei resultierende W/O-Emulsion wird dann anschließend beispielsweise durch Vertropfung in eine weitere Ölphase eingebracht, welche die Di- und Tricarbonsäurekomponente enthält, wodurch dann die Grenzphasenpolymerisation ausgelöst wird. Typischerweise setzt man W/O-Emulsion und Ölphase im Gewichtsverhältnis 3 : 1 bis 1 : 3 und vorzugsweise etwa 2 : 1 bis 1 : 2 ein. Es hat sich im Hinblick auf die Vernetzung und damit die Stabilität der Kapseln als besonders vorteilhaft herausgestellt, die Di- und die Tricarbonsäurekomponente getrennt voneinander einzusetzen, d.h. zunächst wird die Dicarbonsäurekomponente in einer ersten Ölphase zugesetzt, nach dem Ende der Zugabe etwa 10 bis 15 Minuten gerührt und dann die Tricarbonsäurekomponente in einer zweiten Ölphase hinzugegeben. Aus Gründen der besseren Löslichkeit empfiehlt es sich, im Fall der Tricarbonsäurekomponente einen Vertreter mit höherer Polarität als im Fall der Dicarbonsäurekomponente auszuwählen. Als geeignet hat sich beispielsweise das Ölkomponentenpaar Dialkylcyclohexan/Triglycerid erwiesen.

Die Herstellung von Mikrokapseln mit größerem Durchmesser (Alternative II) unterscheidet sich vom ersten Fall im wesentlichen dadurch, dass die Emulsionsbildung nicht unter Zusatz von Emulgatoren erfolgt. In die Ölphase können zudem auch öllösliche oder ölsuspendierbare Wirkstoffe, wie beispielweise Farbpartikel und/oder Korrosionsinhibitoren eingebracht werden, was beispielsweise für die Herstellung von Farben von Interesse sein kann.

Die Polykondensation ist eine exotherme Reaktion und benötigt daher keine Zuführung von Energie. Von Nachteil kann sein, dass auch nach dem Ende der eigentlichen Reaktion noch freie Monomere - sowohl Amin- als auch Säurekomponente - vorhanden sein können, welche nachträglich abreagieren. Dies führt dann dazu, dass einzelne Mikrokapseln durch eine A-midbrücke mit einander verbunden werden und so größere Aggregate bilden. Um dies zu verhindern, kommen verschiedene zusätzliche Reaktionsschritte in Betracht :
- Einsatz der Ölphase im Überschuss,
- Erhöhung der Temperatur, bis eine durchsichtige Lösung erhalten wird,
- Zugabe eines Lösungsmittels mit höherer Polarität, was den Umsetzungsgrad in der Polykondensation verbessert,
- Zugabe einer der beiden Reaktionskomponenten im Überschuss,
- Zugabe von Monocarbonsäuresäurechloriden
sowie Kombinationen dieser Schritte. Die Ergebnisse, die auf diesem Wege erzielt werden, sind jedoch mitunter unbefriedigend. Nachhaltigen Erfolg hatte jedoch
- die Zugabe von gesättigten und/oder ungesättigten Fettsäuren mit 6 bis 22 Kohlenstoffatomen, vorzugsweise von technischer Ölsäure, gegen Ende der Polykondensation und/oder
- die Zugabe eines Fettamins, beispielsweise Kokosamin
sowie die Kombination dieser beiden Schritte.

Um die Sedimentation der Mikrokapseln zu verbessern, empfiehlt es sich ferner nach Abschluss der Polykondensation den Zubereitungen eine Tensidlösung, beispielsweise 2 bis 5 Gew.-% - bezogen auf die kapseln - eines Fettalkoholpolyglycolethers zuzusetzen. Die Mikrokapseln werden anschließend üblicherweise entweder
- mit einer frischen Ölphase gewaschen, die überstehende Lösung abdekantiert, so dass das Endprodukt in einer Ölphase suspendiert vorliegt oder
- mit Lösemitteln bzw. Tensidlösungen behandelt, so dass das Endprodukt schließlich in einer wässrigen Phase vorliegt.

### Gewerbliche Anwendbarkeit

Die erfindungsgemäßen neuen Polyamidmikrokapseln besitzen durch den Einbau von Tricarbonsäuren eine verbesserte Elastizität und Temperaturstabilität. Weitere Gegenstände der Erfindung betreffen daher ihre Verwendung
- zur Herstellung von Wasch-, Spül-, Reinigungs- und Avivagemitteln,
- zur Ausrüstung von Fasern und Textilien, speziell zur Herstellung von Zubereitungen zur Zwangsapplikation von Wirkstoffen,
- zur Ausrüstung von Gebrauchs- und Hygienepapieren,
- zur Herstellung von kosmetischen und pharmazeutischen Zubereitungen, sowie
- zur Herstellung von Farben,
wobei die Mikrokapseln in diesen Mitteln in Mengen von typischerweise 1 bis 10 und vorzugsweise 2 bis 5 Gew.-% enthalten sein können.

### Beispiele

### Allgemeine Herstellvorschrift A

Mikrokapseln mit Durchmessern im Bereich von ca. 5 µm wurden unter Einsatz der Phasen A bis D bzw. A bis F hergestellt. Die Zusammensetzungen der Phasen bzw. die Einsatzmengen zu ihrer Herstellung sind Tabelle 1 zu entnehmen. Alle Umsetzungen erfolgten bei Raumtemperatur (20 °C).

**Tabelle 1 Einsatzmenge zur Herstellung der Phasen [g]**

| **Phase** | **Bestandteile** | **1** | **2** | **3** | **4** | **5** |
|---|---|---|---|---|---|---|
| A | Cetiol® S Diethylhexyl cyclohexane | 67,8 | 67,3 | 67,3 | 66,8 | 66,8 |
| | Dehymuls® PGPH PEG-2 Dipolyhydroxystearate | 2,7 | 1,0 | 1,2 | 1,2 | 1,2 |
| | Lameform® TGI Polyglyceryl-3 diisostearat | 1,8 | 0,7 | 0,8 | 0,8 | 0,8 |
| B | Larania® CI 15510¹⁾ | 16,8 | 16,2 | 16,0 | 16,0 | 16,0 |
| | Glycerin | 0,9 | 0,9 | 0,8 | 0,8 | 0,8 |
| | 1,6-Diaminohexan | 0,3 | 0,3 | 0,2 | 0,3 | 0,3 |
| | Diethyltriamin | 0,1 | 0,1 | 0,1 | 0,1 | 0,1 |
| C | Cetiol® S | 9,0 | 8,7 | 8,5 | 8,5 | 8,5 |
| | Sebacinsäuredichlorid | 0,4 | 0,3 | 0,2 | 0,4 | 0,4 |
| | Trimesinsäuretrichlorid | 0,2 | - | - | - | - |
| D | Myritol® 318 Capric Caprylic Triglycerides | - | 4,3 | 4,3 | 4,3 | 4,3 |
| | Trimesinsäuretrichlorid | - | 0,2 | 0,6 | 0,8 | 0,8 |
| E | Edenor® TiO5 Oleic acid | - | - | - | 12,0 | - |
| | Xylol | - | - | - | - | 50,0 |
| F | Xylol | - | - | - | 50,0 | - |
| | Dodecylamin | - | - | - | - | 2,5 |
| G | Xylol | - | - | - | 50,0 | 5,0 |
| Rührgeschwindigkeit [Upm] | | 800 | 800 | 800 | 800 | 800 |
| Reaktionszeit [min] | | 30 | 30 | 30 | 30 | 30 |
| Kapseldurchmesser [µm] | | 5 | 5 | 5 | 5 | 5 |

| | | | | | | |
|---|---|---|---|---|---|---|
| ¹⁾ Wässrige 0,1 Gew.%ige Farbstofflösung (Ciba), pH = 10 | | | | | | |

### Beispiel 1

Phase A und Phase B wurden unter intensivem Rühren miteinander vermischt. Der auf diese Weise resultierenden W/O-Emulsion wurde dann die Phase C zugefügt. Die Mischung wurden 30 min weiter gerührt und dann mit 50 ml Cetiol® S versetzt, um eine Weiterreaktion zu verhindern.

### Beispiele 2 und 3

Phase A und Phase B wurden unter intensivem Rühren miteinander vermischt. Der auf diese Weise resultierenden W/O-Emulsion wurde dann die Phase C zugefügt. Die Mischung wurden 10 min weiter gerührt, mit Phase D vermischt und weitere 30 min gerührt und dann mit 50 ml Cetiol® S versetzt, um eine Weiterreaktion zu verhindern.

### Beispiele 4 und 5

Phase A und Phase B wurden unter intensivem Rühren miteinander vermischt. Der auf diese Weise resultierenden W/O-Emulsion wurde dann die Phase C zugefügt. Die Mischung wurden 10 min weiter gerührt, mit Phase D vermischt und weitere 30 min gerührt. Anschließend wurde die Zubereitung über Nacht stehen gelassen und am nächsten Tag zunächst unter Rühren mit Phase E vermischt, ehe nach 30 min Phase F und abschließend nach weiteren 60 min Phase G zugegeben wurden, um eine Weiterreaktion zu verhindern.

### Allgemeine Herstellvorschrift B

Mikrokapseln mit Durchmessern im Bereich von ca. 85 µm wurden unter Einsatz der Phasen A bis D bzw. A bis F hergestellt. Die Zusammensetzungen der Phasen bzw. die Einsatzmengen zu ihrer Herstellung sind Tabelle 2 zu entnehmen. Alle Umsetzungen erfolgten bei Raumtemperatur (20 °C).

**Tabelle 2 Einsatzmenge zur Herstellung der Phasen [g]**

| **Phase** | **Bestandteile** | **6** | **7** | **8** | **9** | **10** | **11** | **12** | **13** |
|---|---|---|---|---|---|---|---|---|---|
| A | Cetiol® S Diethylhexyl cyclohexane | 69,0 | 70,3 | 70,1 | 70,3 | 70,7 | - | - | - |
| | Mineralöl | - | - | - | - | - | 300,0 | - | - |
| | Cetiol®OE Dicaprylyl ether | - | - | - | - | - | - | 300,0 | - |
| | 2-Ethylhexylstearat | - | - | - | - | - | - | - | 300,0 |
| B | Larania® CI 15510¹⁾ | 16,1 | 16,0 | 16,0 | - | - | - | - | - |
| | Santilagine® S 550 ²⁾ | - | - | - | - | 0,3 | - | - | - |
| | Wasser (pH 10) | - | - | - | 16,0 | 15,5 | 80,0 | 80,0 | 80,0 |
| | Glycerin | 0,9 | - | - | - | - | - | - | - |
| | 1,6-Diaminohexan | 0,3 | 0,3 | 0,3 | 0,3 | 0,2 | 1,0 | 1,0 | 1,0 |
| | Diethyltriamin | 0,1 | 0,1 | 0,1 | 0,1 | 0,1 | - | - | - |
| | Phenonip | - | - | - | - | - | - | 0,5 | 0,5r |
| C | Cetiol® S Diethylhexyl cyclohexane | 8,7 | 8,5 | 8,5 | 8,5 | 8,5 | - | - | - |
| | Sebacinsäuredichlorid | 0,4 | 0,2 | 0,2 | 0,2 | 0,1 | - | - | - |
| | Glycerin | - | - | - | - | - | 5,0 | 5,0 | 5,0 |
| | Rotes Eisenpigment | - | - | - | - | - | 0,5 | 0,5 | 0,5 |
| D | Myritol® 318 Capric Caprylic Triglycerides | 4,3 | 4,3 | 4,3 | 4,3 | 4,3 | - | - | - |
| | Sebacinsäuredichlorid | - | - | - | - | - | 2,0 | 2,0 | 2,0 |
| | Trimesinsäuretrichlorid | 0,2 | 0,3 | 0,5 | 0,3 | 0,2 | 1,0 | 1,0 | 1,0 |
| | Mineralöl | - | - | - | - | - | 30,0 | - | - |
| | Cetiol® OE Dicaprylyl ether | - | - | - | - | - | - | 30,0 | - |
| | 2-Ethylhexylstearat | - | - | - | - | - | - | - | 30,0 |
| Rührgeschwindigkeit [Upm] | | 800 | 800 | 800 | 800 | 800 | 800 | 800 | 800 |
| Reaktionszeit [h] | | 18 | 18 | 12 | 12 | 18 | 18 | 18 | 18 |
| Kapseldurchmesser [µm] | | 85 | 112 | 118 | 115 | 120 | 110 | 110 | 110 |

| | | | | | | | | | |
|---|---|---|---|---|---|---|---|---|---|
| 1) Wässrige 0,1 Gew.%ige Farbstofflösung (Ciba), pH = 10,²⁾ Farbpigment | | | | | | | | | |

### Beispiel 6

Phase A und Phase B wurden unter intensivem Rühren miteinander vermischt. Der auf diese Weise resultierenden W/O-Emulsion wurde dann die Phase C zugefügt. Die Mischung wurden 10 min weiter gerührt, mit Phase D vermischt, über Nacht gerührt und dann mit 50 ml 1,6-Diaminohexan versetzt, um eine Weiterreaktion zu verhindern.

### Beispiele 7 bis 10

Phase A und Phase B wurden unter intensivem Rühren miteinander vermischt. Der auf diese Weise resultierenden W/O-Emulsion wurde dann die Phase C zugefügt. Die Mischung wurden 10 min weiter gerührt, mit Phase D vermischt und über Nacht gerührt. Die Reaktion wurde nicht abgebrochen, so dass der größere mittlere Partikeldurchmesser in erster Linie davon herrührt, dass Kapseln miteinander verbunden vorliegen.

### Beispiele 11 bis 13

Phase B und Phase C wurden unter intensivem Rühren miteinander vermischt. Die auf diese Weise resultierende W/O-Emulsion wurde dann in die Phase A eingerührt. Die Mischung wurden 10 min weiter gerührt, mit Phase D vermischt und weitere 30 min gerührt.

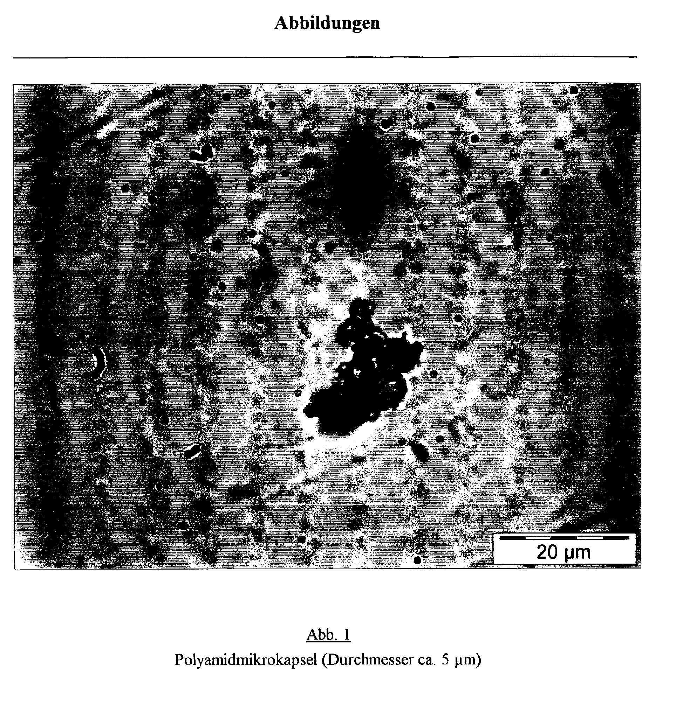

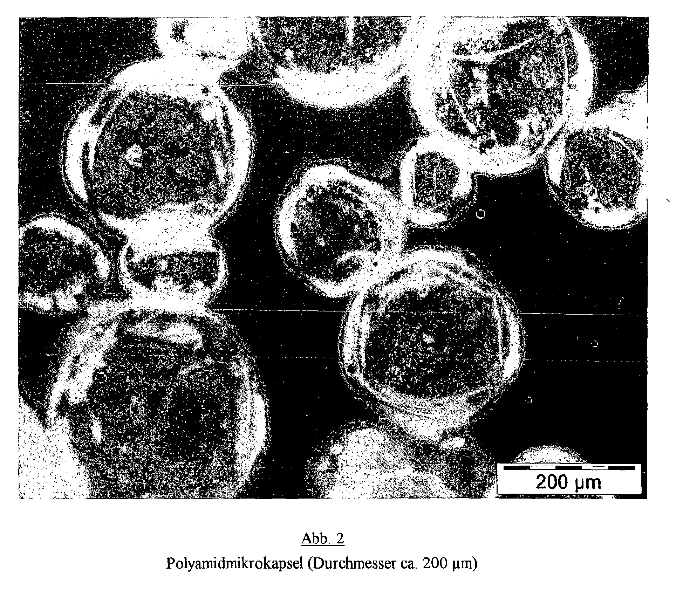

## Patentansprüche

1. Polyamidmikrokapseln mit einem mittleren Durchmesser im Bereich von 0,0001 bis 5 mm, dadurch erhältlich, dass man
(a) eine wässrige Phase enthaltend (a1) Di- und/oder Triamine herstellt,
(b) eine Ölphase, enthaltend (b1) Ölkörper, (b2) Dicarbonsäurechloride und (b3) Tricarbonsäurechloride herstellt, und
(c) die beiden Phasen unter Ausbildung einer Emulsion in Kontakt bringt, so dass an den Grenzflächen eine Polykondensationsreaktion stattfindet.

2. Verfahren zur Herstellung von Polyamidmikrokapseln mit einem mittleren Durchmesser im Bereich von 0,0001 bis 5 mm, bei dem man
(a) eine wässrige Phase enthaltend (a1) Di- und/oder Triamine herstellt,
(b) eine Ölphase, enthaltend (b1) Ölkörper, (b2) Dicarbonsäurechloride und (b3) Tricarbonsäurechloride herstellt, und
(c) die beiden Phasen unter Ausbildung einer Emulsion in Kontakt bringt, so dass an den Grenzflächen eine Polykondensationsreaktion stattfindet.

3. Verfahren zur Herstellung von Polyamidmikrokapseln mit einem mittleren Durchmesser im Bereich von 0,0001 bis 0,1 mm, bei dem man
(a) eine Ölphase, enthaltend (c1) Ölkörper sowie (c2) oberflächenaktive Mittel herstellt,
(b) eine wässrige Phase, enthaltend (a1) Di- und/oder Triamine sowie gegebenenfalls (c3) wasserlösliche Wirkstoffe herstellt,
(c) Ölphase und wässrige Phase unter Bildung einer W/O-Emulsion vermischt,
(d) und die W/O-Emulsion mit einer weiteren eine Ölphase, enthaltend (b1) Ölkörper, (b2) Dicarbonsäurechloride und (b3) Tricarbonsäurechloride in Kontakt bringt, so dass an den Grenzflächen eine Polykondensationsreaktion stattfindet.

4. Verfahren zur Herstellung von Polyamidmikrokapseln mit einem mittleren Durchmesser im Bereich von 0,1 bis 5 mm, bei dem man
(a) eine Ölphase, enthaltend (c1) Ölkörper sowie gegebenenfalls (c4) öllösliche oder ölsuspendierbare Wirkstoffe herstellt,
(b) eine wässrige Phase, enthaltend (a1) Di- und/oder Triamine sowie gegebenenfalls (c3) wasserlösliche Wirkstoffe herstellt,
(c) Ölphase und wässrige Phase unter Bildung einer W/O-Emulsion vermischt,
(d) und die W/O-Emulsion mit einer weiteren eine Ölphase, enthaltend (b1) Ölkörper, (b2) Dicarbonsäurechloride und (b3) Tricarbonsäurechloride in Kontakt bringt, so dass an den Grenzflächen eine Polykondensationsreaktion stattfindet.

5. Verfahren nach mindestens einem der Ansprüche 2 bis 4, **dadurch gekennzeichnet, dass** man die die Säurechloride enthaltende Ölphase auf eine Phase mit Dicarbonsäurechloriden und eine Phase mit Tricarbonsäurechloriden verteilt und einsetzt.

6. Verfahren nach mindestens einem der Ansprüche 2 bis 5, **dadurch gekennzeichnet, dass** man als Di- und/oder Triamine (Komponente a1) Hexamethylendiamin, Diethylentriamin sowie deren Gemische einsetzt.

7. Verfahren nach mindestens einem der Ansprüche 2 bis 6, **dadurch gekennzeichnet, dass** man als Ölkörper (Komponente b1 bzw. c1) Mineralöle, langkettige Fettsäureester, Dialkylcyclohexane, Dialkylether, Dialkylcarbonate sowie deren Gemische einsetzt.

8. Verfahren nach mindestens einem der Ansprüche 2 bis 7, **dadurch gekennzeichnet, dass** man als Dicarbonsäurederivat (Komponente b2) Sebacinsäuredichlorid einsetzt.

9. Verfahren nach mindestens einem der Ansprüche 2 bis 8, **dadurch gekennzeichnet, dass** man als Tricarbonsäurederivat (Komponente b3) Trimesinsäuretrichlorid einsetzt.

10. Verfahren nach mindestens einem der Ansprüche 3 bis 9, **dadurch gekennzeichnet, dass** man als oberflächenaktive Mittel nichtionische Tenside bzw. Emulgatoren einsetzt.

11. Verfahren nach mindestens einem der Ansprüche 3 bis 10, **dadurch gekennzeichnet, dass** man nach Abschluss der Polykondensation den Produkten gesättigte und/oder ungesättigten Fettsäuren mit 6 bis 22 Kohlenstoffatomen und/oder Fettamine mit 6 bis 22 Kohlenstoffatomen zusetzt.

12. Verwendung von Polyamidmikrokapseln nach Anspruch 1 zur Herstellung von Wasch-, Spül-, Reinigungs- und Avivagemitteln.

13. Verwendung von Polyamidmikrokapseln nach Anspruch 1 zur Ausrüstung von Fasern und Textilien.

14. Verwendung von Polyamidmikrokapseln nach Anspruch 1 zur Ausrüstung von Gebrauchs- und Hygienepapieren.

15. Verwendung von Polyamidmikrokapseln nach Anspruch 1 zur Herstellung von kosmetischen und pharmazeutischen Zubereitungen.

16. Verwendung von Polyamidmikrokapseln nach Anspruch 1 zur Herstellung von Farben.

17. Verwendung von Polycarbonsäuren mit wenigstens drei Carboxylgruppen zur Herstellung von Polyamidkapseln.
